Europäisches Patentamt

European Patent Office

Office européen des brevets

(11) Numéro de publication : **0 346 172 B1**

# FASCICULE DE BREVET EUROPEEN

(45) Date de publication du fascicule du brevet :
**29.01.92 Bulletin 92/05**

(51) Int. Cl.⁵ : **B24B 55/04**, B23Q 11/10

(21) Numéro de dépôt : **89401348.1**

(22) Date de dépôt : **16.05.89**

(54) **Dispositif pour diminuer les éclaboussures de liquide dans une machine à meuler.**

(30) Priorité : **02.06.88 FR 8807351**

(43) Date de publication de la demande :
**13.12.89 Bulletin 89/50**

(45) Mention de la délivrance du brevet :
**29.01.92 Bulletin 92/05**

(84) Etats contractants désignés :
**DE ES GB IT SE**

(56) Documents cités :
**DE-A- 3 503 009**
**GB-A- 322 121**
**GB-A- 2 151 956**
**DERWENT, semaine D24, 22 juillet 1981,**
**résumé no. F5022, Derwent Publications, Ltd,**
**Londres, GB; & SU-A-759 301 (WORKS**
**SAFETY) 30-08-80**

(56) Documents cités :
**DERWENT, semaine C06, 19 mars 1980,**
**résumé no. B3354, Derwent Publications, Ltd,**
**Londres, GB; & SU-A-663 569 (VTSSPS WORK**
**SAFETY) 05-06-1979**

(73) Titulaire : **BRIOT INTERNATIONAL**
**2, rue Roger Bonnet**
**F-27340 Pont de l'Arche (FR)**

(72) Inventeur : **Longuet, Raynald Gaston Marcel**
**Route de Houlbec Le Gros Theil**
**F-27370 Amfreville la Campagne (FR)**
Inventeur : **Langlois, Jean-Pierre Marie**
**Fernand**
**124, rue du Champ des Oiseaux**
**F-76000 Rouen (FR)**

(74) Mandataire : **Barnay, André François**
**Cabinet Barnay 80 rue Saint-Lazare**
**F-75009 Paris (FR)**

**Description**

La présente invention est relative aux machines a meuler et elle concerne plus particulièrement l'arrosage de la meule.

L' arrosage d'une meule provoque toujours des projections et des éclaboussures de liquide et, dans certains cas, la formation d'un brouillard. Le volume et la direction de ces projections, de même que la formation du brouillard sont fonctions de différents paramètres, parmi lesquels les plus importants sont la position et le débit de la source de liquide et la vitesse de la meule.

Dans la plupart des cas la meule est entourée par un carter qui recueille et canalise le liquide projeté vers un bac de récupération ou d'élimination.

Dans les machines à meuler dans lesquelles la meule tourne à une vitesse élevée et utilisées pour des travaux de précision nécessitant une surveillance constante de la pièce à meuler, les éclaboussures et le brouillard peuvent gêner considérablement l'observation de cette pièce.

On connaît déjà certains dispositifs étudiés pour empêcher une dispersion anarchique des éclaboussures, qui comprennent par exemple des jeux d'ailettes qui sont disposées dans le carter, en aval de la pièce à meuler, de manière à empêcher les gouttes de liquide de rebondir en brisant leur trajectoire et en les recueillant pour les laisser ensuite s'écouler par gravité dans une bâche collectrice.

D'une façon générale ces ailettes ont une configuration relativement compliquée et leur disposition dans le carter, auquel elles sont fixées, est telle qu'elles recueillent et retiennent une grande partie du liquide avec les particules de matière qui se déposent et finissent par encrasser l'agencement, ce qui nécessite de démonter le carter pour nettoyer et gratter les ailettes.

FR-A-2557000 décrit notamment un agencement de ce type dans son application à une machine à meuler les verres ophtalmiques. Suivant ce dispositif, il est prévu des ailettes fixées à la surface interne du carter, ces ailettes ayant chacune en section transversale une forme incurvée et, considérée en plan, une forme coudée en angle obtus.

Dans ce dispositif les particules de matière détachées par la meule viennent s'accumuler dans les angles formés entre la paroi du carter et les ailettes ainsi que dans celles-ci.

Le même inconvénient résulte de la conception du dispositif décrit et représenté dans le document GB-A-322121 représentant l'état de la technique le plus proche comme indiqué dans le préambule de la revendication 1, qui comporte une grille formée par des lames inclinées, à la façon de lames de persiennes, dans le sens de rotation de la meule.

Le but de l'invention est de remédier à ces inconvénients en réalisant un dispositif d'ailettes destiné à être fixé dans un carter d'une meule d'une machine à meuler, ce dispositif étant adapté pour éviter l'accumulation des particules de matière dans les angles et favoriser l'écoulement du liquide, obtenant en même temps un effet de lavage des ailettes.

Elle a pour objet à cet effet un dispositif pour diminuer les éclaboussures de liquide dans le carter d'une machine à meuler, qui est constitué par une grille formée par des lames inclinées, à la façon des lames de persiennes, dans le sens de la rotation de la meule, mais de plus disposées obliquement par rapport à l'horizontale entre deux plaques sur lesquelles elles sont fixées par leurs extrémités, des ouvertures étant prévues dans celle desdites plaques portant les extrémités les plus basses desdites lames, au droit de ces extrémités.

Grâce à cette orientation des lames, celles-ci offrent aux gouttes de liquide projetées en arrière de la pièce à meuler une surface inclinée descendante d'une part axialement d'avant en arrière et d'autre part radialement, vers la droite (ou vers la gauche) de la meule, et les gouttes de liquide s'écoulent par gravité le long desdites lames aux extrémités inférieures desquelles le liquide ainsi recueilli s'écoule à travers la plaque portant les extrémités les plus basses des lames, par lesdites ouvertures.

Des grilles à lames inclinées suivant l'invention peuvent être disposées dans la partie supérieure du carter de la machine, de préférence à peu près au niveau de la ligne de contact de la pièce à meuler avec la meule.

La description qui va suivre, en regard des dessins annexés à titre d'exemples non limitatifs, permettra de bien comprendre comment l'invention peut être mise en pratique.

La figure 1 est une vue partielle en coupe transversale à l'axe de la meule et à celui portant le verre sur le chariot d'une machine à meuler les verres ophtalmiques.

La figure 2 est une vue en perspective à plus grande échelle d'un ensemble d'ailettes suivant l'invention.

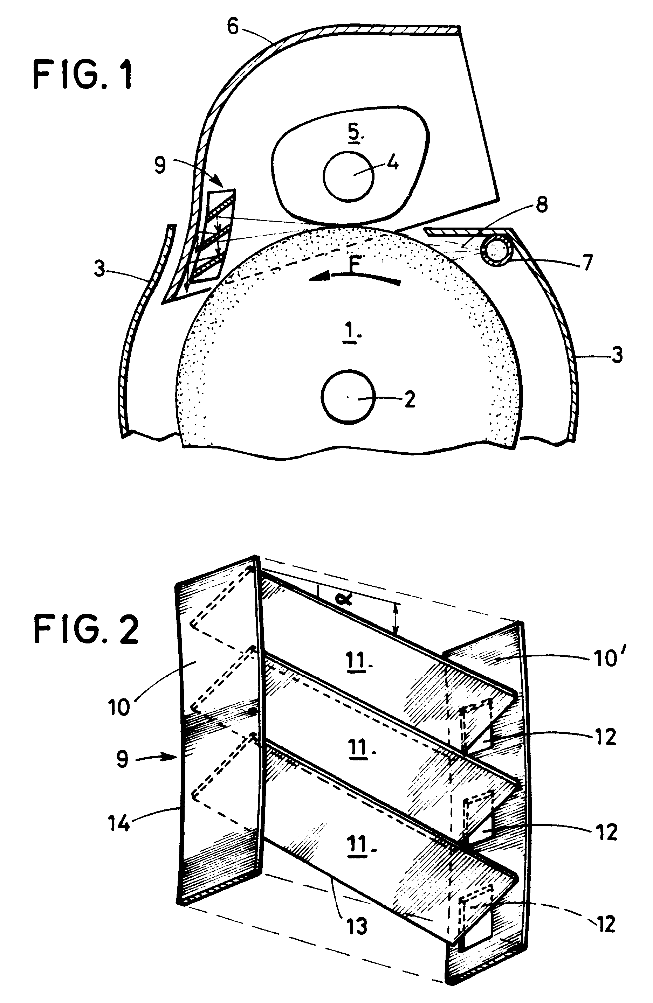

En se référant à la figure 1, on a représenté une partie d'une machine à meuler les verres ophtalmiques, c'est-à-dire une partie de la meule 1 montée sur son axe 2 pour tourner dans la partie inférieure 3 d'un carter ouverte à sa partie supérieure, et l'axe 4 d'un chariot (non représenté) portant un verre ophtalmique 5 devant être meulé en contact avec la meule 1 et tournant dans une partie supérieure 6 dudit carter solidaire du chariot et ouverte sur son côté avant afin de permettre d'observer le travail en cours.

La meule 1 tourne dans le sens de la flèche F et une rampe 7 de distribution de liquide d'arrosage de la meule est disposée devant celle-ci, dans la partie supérieure avant du carter 3 de manière à diriger un jet 8 sur la partie supérieure de la meule, en amont du point de contact du verre 5.

En fonctionnement, le liquide est entraîné par la meule et est projeté violemment vers l'arrière en aval du verre 5 et rebondit sur la paroi des parties 3 et 6 du carter, en éclaboussant et provoquant la formation d'un brouillard qui gêne l'observation du travail ; lorsqu' une plaque de verre est prévue dans l'ouverture de la partie supérieure 6 du carter, ce brouillard se dépose sur ce verre, rendant toute observation impossible.

Pour remédier à cet inconvénient, il a été proposé de disposer des ailettes fixées sur la paroi interne du carter, dans différentes régions de celui-ci et notamment autour de la partie inférieure arrière de la meule.

Suivant l'invention, il est prévu une grille à lames inclinées, désignée dans son ensemble par la référence 9 et représentée à plus grande échelle à la figure 2.

La grille 9 est formée de deux montants latéraux 10, 10′ destinés à être fixés à peu près verticalement sur la surface interne du carter de la machine et formés de deux plaques allongées dont les bords longitudinaux peuvent avoir une forme complémentaire de celle de la partie du carter sur laquelle la grille doit être fixée.

Les plaques 10, 10′ sont réunies par des lames parallèles 11 ayant dans leur ensemble une forme à peu près rectangulaire, fixées par leurs extrémités sur les plaques dans une position inclinée de haut en bas et d'avant en arrière en considérant le dessin, comme des lames de persiennes, mais également obliquement, c'est-à-dire avec leur extrémité — par exemple de droite en considérant le dessin — décalée vers le bas par rapport à leur extrémité opposée. En d'autres termes, de manière que les lames 11 aient une extrémité plus basse que l'autre lorsqu'on considère la grille de face, les plaques 10, 10′ sont égales et à la même hauteur.

D'une façon avantageuse, lesdites lames sont disposées obliquement de façon à former un angle α d'environ 30° par rapport à l'horizontale.

Suivant une autre caractéristique de l'invention, des ouvertures 12 sont formées dans la plaque 10′, sur laquelle sont fixées les extrémités basses des lames et de manière à chevaucher celles-ci.

On notera en outre que les lames 11 sont fixées sur les plaques 10, 10′ de manière que leur bord arrière 13 soit légèrement espacé du bord arrière 14 des plaques 10, 10′ afin de laisser subsister un intervalle entre les lames et le carter lorsque la grille est fixée en place.

Comme représenté à la figure 1, la grille 9 est avantageusement fixée dans la partie supérieure 6 du carter de façon à couvrir une région s'étendant en amont au-dessus et au-dessous de la ligne de contact du verre 5 avec la meule 1. Grâce à cet agencement, dans un premier temps les gouttes de liquide sont projetées par la meule et traversent la grille ; dans un second temps elles rebondissent sur le dos des lames et dans un troisième temps le liquide recueilli sur le dos des lames et celui ayant frappé leur face avant s'écoulent par gravité à travers les trous 12, hors de portée du courant d'air produit par la rotation de la meule et est finalement recueilli au fond de la partie 3 du carter. On évite également une accumulation de liquide et de particules solides dans des angles solides. Dans une variante, comme représenté en trait mixte à la figure 1, la grille 9 peut être disposée à peu près au niveau de l'axe de rotation de la meule 1, ou bien il peut être prévu deux grilles.

Bien que suivant l'exemple représenté la grille comporte trois lames 11, on comprend bien entendu qu'elle peut en comporter un nombre quelconque.

## Revendications

1. Dispositif pour diminuer les éclaboussures de liquide dans le carter d'une machine à meuler, du type constitué par une grille (9) formée par des lames inclinées (11), à la façon de lames de persiennes, dans le sens de la rotation de la meule, caractérisé en ce que les lames sont de plus disposées obliquement par rapport à l'horizontale entre deux plaques (10, 10′) sur lesquelles elles sont fixées par leurs extrémités, des ouvertures (12) étant prévues dans celle (10′) desdites plaques portant les extrémités les plus basses desdites lames, au droit de ces extrémités.

2. Dispositif suivant la revendication 1, caractérisé en ce que les lames (11) de ladite grille sont inclinées de haut en bas et d'avant en arrière, dans le sens de rotation de la meule (1), et s'étendent obliquement par rapport à l'horizontale, transversalement au sens de rotation de la meule.

3. Dispositif suivant la revendication 2, caractérisé en ce que les lames (11) forment par rapport à l'horizontale un angle α d'environ 30°.

4. Dispositif suivant l'une quelconque des revendications 1 à 3, caractérisé en ce que la grille (9) est fixée dans le carter (6) en amont par rapport au sens de rotation de la meule (1) de manière à couvrir une région s'étendant au-dessus et au-dessous de la ligne de contact de la pièce à meuler (5) avec la meule (1).

5. Dispositif suivant l'une quelconque des revendications 1 à 3, caractérisé en ce que la grille (9) est fixée dans le carter (3) à peu près au niveau de l'axe de rotation (2) de la meule.

6. Dispositif suivant l'une ou l'autre des revendications 1 à 3, caractérisé en ce qu'une grille (9) est fixée au niveau de la ligne de contact de la pièce à meuler (5) avec la meule (1), et une autre grille (9) est fixée au niveau de l'axe de la meule (1).

7. Dispositif suivant l'une quelconque des revendications 4 à 6, caractérisé en ce que le bord arrière (13) des lames (11) est espacé de la surface du carter (3, 6).

## Patentansprüche

1. Vorrichtung zur Verminderung von Flüssigkeitsspritzern im Gehäuse einer Schleifmaschine, die mit einem Rost (9) versehen ist, der aus im Drehsinn der Schleifscheibe schräg angeordneten Lamellen (11) in der Art einer Fensterjalousie besteht, dadurch gekennzeichnet, daß die Lamellen darüberhinaus schräg bezüglich der Horizontalen zwischen zwei Platten (10, 10') angeordnet sind, an denen sie mit ihren Enden befestigt sind, wobei in der die tieferliegenden Enden der Lamellen tragenden Platte (10') gerade an diesen Enden Ausnehmungen (12) vorgesehen sind.

2. Vorrichtung nach Anspruch 1, dadurch gekennzeichnet, daß die Lamellen (11) des Rostes schräg von oben nach unten und von vorn nach hinten im Drehsinn der Schleifscheibe (1) geneigt sind und sich bezüglich der Horizontalen und quer zum Drehsinn der Schleifscheibe schräg erstrecken.

3. Vorrichtung nach Anspruch 2, dadurch gekennzeichnet, daß die Lamellen (11) mit der Horizontalen einen Winkel alpha von etwa 30° einschließen.

4. Vorrichtung nach einem der Ansprüche 1 bis 3, dadurch gekennzeichnet, daß der Rost (9) derart oberhalb bezüglich des Drehsinns der Schleifscheibe (1) im Gehäuse (6) angeordnet ist, daß er einen sich oberhalb und unterhalb der Berührungslinie des zu schleifenden Gegenstandes (5) mit der Schleifscheibe (1) erstreckenden Bereich überdeckt.

5. Vorrichtung nach einem der Ansprüche 1 bis 3, dadurch gekennzeichnet, daß der Rost (9) im Gehäuse (6) ungefähr in der Höhe der Rotationsachse (2) der Schleifscheibe angeordnet ist.

6. Vorrichtung nach einem oder mehreren der Ansprüche 1 bis 3, dadurch gekennzeichnet, daß ein Rost (9) auf der Höhe der Berührungslinie des zu schleifenden Gegenstandes (5) mit der Schleifscheibe (1) und ein weiterer Rost (9) auf der Höhe der Rotationsachse der Schleifscheibe (1) angeordnet ist.

7. Vorrichtung nach einem der Ansprüche 4 bis 6, dadurch gekennzeichnet, daß der hintere Rand (13) der Lamellen (11) von der Oberfläche des Gehäuses (3, 6) beabstandet ist.

## Claims

1. Apparatus for reducing splashing of liquid in the casing of a grinding machine, of the kind comprising a screen (9) formed of blades (11) like blades of shutters, inclined in the direction of rotation of the grinding wheel, characterised in that the blades are also disposed at an angle to the horizontal between two plates (10, 10') to which they are fixed at their ends, with openings (12) being provided in the one said plate (10') carrying the lower ends of the said blades, at right angles to the ends.

2. Apparatus according to Claim 1, characterised in that the blades (11) of the said screen are inclined from top to bottom and from front to rear, in the direction of rotation of the grinding wheel (1), and extend obliquely with respect to the horizontal, transversely of the direction of rotation of the grinding wheel.

3. Apparatus according to claim 2, characterised in that the blades (11) form an angle $\alpha$ of about 30° with respect to the horizontal.

4. Apparatus according to any one of claims 1 to 3, characterised in that the screen (9) is fixed in the casing (6) forwardly in relation to the direction of rotation of the grinding wheel (1) in such a way as to cover a region extending above and below the line of contact of the part being ground (5) with the grinding wheel (1).

5. Apparatus according to any one of claims 1 to 3, characterised in that the screen (9) is fixed in the casing (3) near the level of the axis of rotation (2) of the grinding wheel.

6. Apparatus according to any one of claims 1 to 3, characterised in that a screen (9) is fixed at the level of the line of contact of the part being ground (5) with the grinding wheel (1), and another screen (9) is fixed at the level of the axis of the grinding wheel (1).

7. Apparatus according to any one of claims 4 to 6 characterised in that the rear edge (13) of the blades (11) is spaced from the surface of the casing (3, 6).

FIG. 1

FIG. 2